# EUROPEAN PATENT APPLICATION

(11) **EP 3 616 942 A1**
(43) Date of publication of application: **04.03.2020**
(21) Application number: 18791963.4
(22) Date of filing: 09.02.2018
(51) Int. Cl.: B60C 5/00

(54) **PNEUMATIC TIRE**

(30) Priority: 25.04.2017 JP 2017086146
(71) Applicant: Bridgestone Corporation, Tokyo 104-8340 (JP)
(72) Inventor: HASEGAWA, Keiichi, Tokyo 104-8340 (JP); MATSUMOTO, Yoshifumi, Tokyo 104-8340 (JP); KOUNO, Yoshihide, Tokyo 104-8340 (JP)
(74) Representative: Oxley, Robin John George
(86) International application number: PCT/JP2018/004745
(87) International publication number: WO 2018/198482

(57) **Abstract**

A pneumatic tire has: a noise suppressing member that has a mounting portion that is plate-shaped and that is fixed to a tire inner surface, a convex portion that is plate-shaped and is curved convexly from the mounting portion toward an inner side in a tire radial direction, and a bent portion that is formed at a boundary between the mounting portion and the convex portion, wherein a rib is provided that extends from the mounting portion, which adjoins the bent portion, the convex portion.

## Description

### Technical Field

The present disclosure relates to a pneumatic tire.

### Background Art

Japanese Patent Application Laid-Open (JP-A) No. 2016-34779 discloses a structure in which, in order to reduce cavity resonance noise of a tire, a plate-shaped member is mounted to a tread portion inner surface at at least two mounting portions that are disposed with an interval therebetween in the tire circumferential direction. The plate-shaped member has a space between the plate-shaped member and the tread portion inner surface at between the adjoining two mounting portions, and is formed in a shape that is convex toward the tire radial direction inner side.

### SUMMARY OF INVENTION

### Technical Problem

In a case in which a plate-shaped noise suppressing member such as that of the above-described conventional example is used, if the tire radial direction height of the noise suppressing member is made to be large, it is easy to inhibit the generation of cavity resonance within the tire. However, it can be thought that, depending on the material of the noise suppressing member, it is easy for the noise suppressing member to deform in a direction of collapsing, due to generation of heat at the tire at the time of traveling and centrifugal force that is applied to the noise suppressing member.

In the above-described conventional example, it is disclosed that a reinforcing member, which is a body separate from the plate-shaped member, is mounted. However, if such a reinforcing member is provided separately, the increase in weight and the processing cost increase.

An object of the present disclosure is to suppress deformation of a noise suppressing member at the time of traveling, while suppressing an increase in the weight of the tire.

### Solution to Problem

A pneumatic tire relating to the present disclosure has: a noise suppressing member that has a mounting portion that is plate-shaped and that is fixed to a tire inner surface, a convex portion that is plate-shaped and is curved convexly from the mounting portion toward an inner side in a tire radial direction, and a bent portion that is formed at a boundary between the mounting portion and the convex portion, wherein a rib is provided that extends from the mounting portion, which adjoins the bent portion, to the convex portion.

### Advantageous Effects of Invention

In accordance with the pneumatic tire relating to the present disclosure, deformation of a noise suppressing member at the time of traveling can be suppressed, while an increase in the weight of the tire is suppressed.

### BRIEF DESCRIPTION OF DRAWINGS

Fig. 1 is a sectional perspective view showing a state in which a pneumatic tire relating to a present embodiment is cut in the tire axial direction.
Fig. 2 is a cross-sectional view that is seen in the direction of arrow 2-2 of Fig. 1 and shows a noise suppressing member.
Fig. 3 is a cross-sectional view that corresponds to Fig. 2 and shows modified example 1 of the noise suppressing member.
Fig. 4 is a cross-sectional view that corresponds to Fig. 2 and shows modified example 2 of the noise suppressing member.
Fig. 5 is a perspective view showing modified example 3 of the noise suppressing member.

### DESCRIPTION OF EMBODIMENTS

An embodiment is described hereinafter on the basis of the drawings. In the drawings, the arrow C direction indicates the direction tangent to the tire circumferential direction, the arrow R direction indicates the tire radial direction outer side, and the arrow W direction indicates the tire width direction. The tire radial direction means the direction orthogonal to the tire rotational axis (not illustrated). The tire width direction means the direction parallel to the tire rotational axis. The tire width direction can also be called the tire axial direction.

The methods of measuring the dimensions of the respective portions are in accordance with the methods put forth in the 2017 YEAR BOOK issued by JATMA (Japan Automobile Tyre Manufacturer Association, Inc.). In cases in which TRA standards and ETRTO standards are applied in the regions of use or the regions of manufacturing, those respective standards are followed.

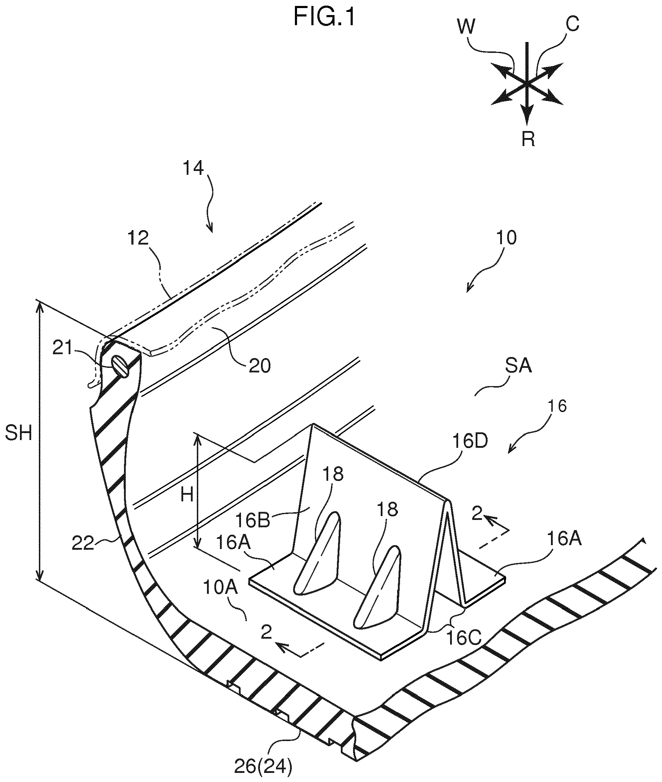

In Fig. 1, when a pneumatic tire 10 relating to the present embodiment is mounted to a rim 12, there becomes a tire/rim assembly 14. The pneumatic tire 10 has a pair of bead portions 20 that have bead cores 21, a pair of side portions 22 that respectively extend toward the tire radial direction outer side from the pair of bead portions 20, and a crown portion 24 that extends from the side portions 22 toward the tire width direction inner side. The insides of the respective portions, including the materials thereof, can be structured arbitrarily. At the pneumatic tire 10, the portion that is to 30% of a sectional height SH from the tire radial direction inner side end is called the bead portion 20, and the portion at which a tread 26 is disposed is called the crown portion 24.

The pneumatic tire 10 has a noise suppressing member 16. The noise suppressing member 16 is a plate-shaped member for suppressing cavity resonance, and is formed from a sheet-shaped resin for example, and is fixed to a tire inner surface 10A. The material of the tire inner surface 10A is, for example, rubber or resin.

At least a portion of an annular space SA that is formed within the pneumatic tire 10 is in a state of being partitioned by the noise suppressing member 16. The noise suppressing member 16 is not a member for absorbing cavity resonance that is temporarily generated, and is a member for making it such that cavity resonance itself is not generated.

The noise suppressing member 16 has mounting portions 16A that are plate-shaped and that are fixed to the tire inner surface 10A, a convex portion 16B that is plate-shaped and is curved convexly toward the tire radial direction inner side from the mounting portions 16A, and bent portions 16C that are formed at the borders between the mounting portions 16A and the convex portion 16B.

For example, a pair of the mounting portions 16A are provided. The convex portion 16B is formed in an upside-down V-shape for example, and the lower ends thereof are joined to the pair of mounting portions 16A, respectively. The pair of mounting portions 16A are apart from one another in the tire circumferential direction. The noise suppressing member 16 has two of the bent portions 16C. The convex portion 16B can also be called a projecting portion, a jutting-out portion, or the like.

Ribs 18 at two places for example are provided from the mounting portion 16A, which adjoins the bent portion 16C, over to the convex portion 16B. In other words, the ribs 18 are provided in a vicinity of the bent portion 16C. Note that the ribs 18 may straddle over the bent portion 16C and directly connect the mounting portion 16A and the convex portion 16B.

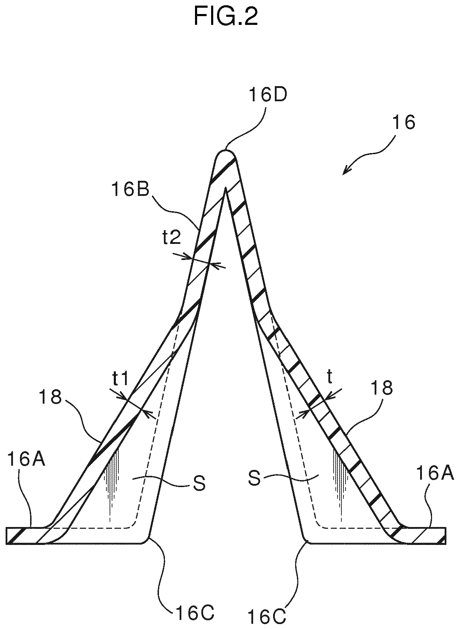

The ribs 18 are, for example, formed integrally with the noise suppressing member 16. As shown in Fig. 2, for example, the ribs 18 are formed in the shapes of shells having spaces S at the inner sides thereof. A plate thickness t1 of the ribs 18 is, for example, equal to a plate thickness t2 of the region of the noise suppressing member 16, at the peripheries of the ribs 18. The resin that structures the noise suppressing member 16 is a thermoplastic resin for example. Accordingly, the noise suppressing member 16 can be manufactured by a resin such as PET (polyethylene terephthalate) or the like for example being blow molded. The noise suppressing member 16 can also be manufactured by press molding a resin. Note that, in Fig. 1 and Fig. 2, the ridgeline of the rib 18 is rectilinear, but the ridgeline of the rib 18 may be structured by a combination of plural straight lines, or a combination of a straight line and a curve, or a combination of curves. Further, the rib 18 may be a solid structure.

A maximum height dimension H of the noise suppressing member 16 in the tire radial direction is preferably greater than or equal to 50% of the tire sectional height SH. The maximum height dimension H is the height in the state in which the noise suppressing member 16 is fixed to the tire inner surface. This is because, if the maximum height dimension H is smaller than 0.5SH, the effect of suppressing cavity resonance decreases.

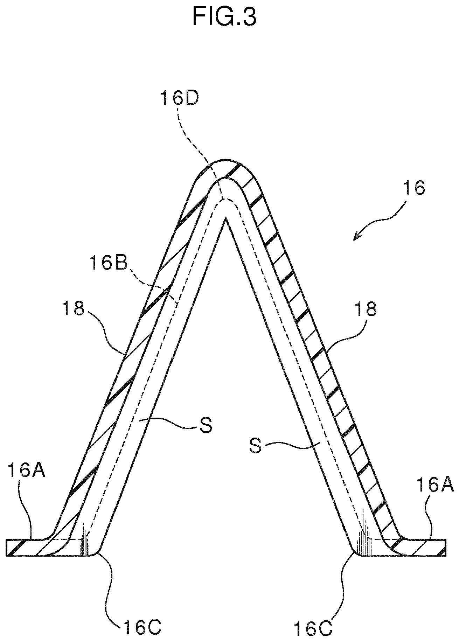

The structure of the noise suppressing member 16 is not limited to this, and may be the structures that are shown in Fig. 3 through Fig. 5 for example. In modified example 1 that is shown in Fig. 3, the rib 18 is formed continuously from one of the mounting portions 16A to the other mounting portion 16A. In other words, in the cross-section of Fig. 3, the rib 18 does not end midway along the convex portion 16B, and is formed so as to span over the entire convex portion 16B. Due thereto, the region from the one mounting portion 16A to the other mounting portion 16A, including the entire convex portion 16B, can be reinforced.

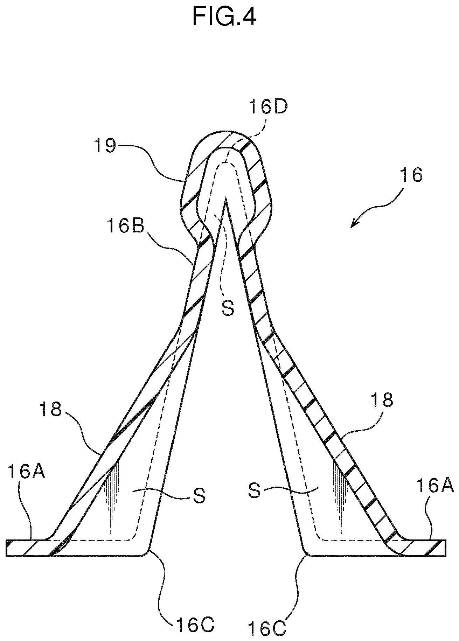

In modified example 2 that is shown in Fig. 4, in addition to the ribs 18, a rib 19 is provided at a portion, which includes a peak portion 16D, of the convex portion 16B. In the same way as the rib 18, this rib 19 is formed in the shape of a shell and has the space S at the inner side thereof. Because the peak portion 16D of the convex portion 16B is also a bent portion, deformation of the peak portion 16D can be suppressed due to the peak portion 16D being reinforced by the rib 19.

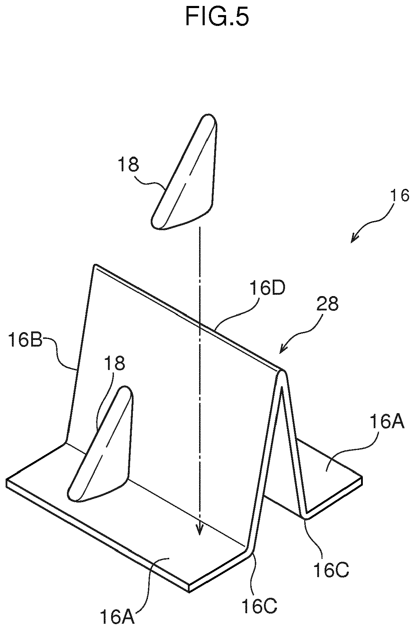

In modified example 3 that is shown in Fig. 5, the ribs 18 are structured as bodies that are separate from a base body 28 of the noise suppressing member 16, and that are mounted to the base body 28 by means such as adhesion, welding, fitting-in, magnets, or the like. By making the ribs 18 be bodies separate from the base body 28, the strength of the noise suppressing member 16 can be adjusted by the ribs 18, while standardizing the base body 28. Note that the ribs 18 that are formed integrally with the noise suppressing member 16 in advance, and the ribs 18 that are separate bodies and that are mounted later, may both exist, without making all of the ribs 18 be bodies separate from the noise suppressing member 16.

### (Operation)

The present embodiment is structured as described above, and the operation thereof is described hereinafter. In Fig. 1, in the pneumatic tire 10 relating to the present embodiment, there is a state in which at least a portion of the annular space SA that is formed within the tire is partitioned by the noise suppressing member 16 that is fixed to the tire inner surface 10A. Due thereto, the generation of cavity resonance can be inhibited.

At the noise suppressing member 16, the bent portions 16C are formed at the borders of the mounting portions 16A and the convex portion 16B that are respectively plate-shaped. The ribs 18 are provided from the mounting portions 16A, which adjoin the bent portions 16C, over to the convex portion 16B. Because the vicinities of the bent portions 16C are reinforced by the ribs 18, the second moment of area of these regions increases, and it is possible to suppress deformation of the noise suppressing member 16 at the bent portions 16C in a direction of collapsing, due to generation of heat at the tire at the time of traveling and centrifugal force that is applied to the noise suppressing member 16. Further, at the noise suppressing member 16, reinforcing means can be eliminated from regions where reinforcement is not needed.

Further, in a case in which the ribs 18 are formed integrally with the noise suppressing member 16, reinforcing means that are separate bodies are not needed, and lightening of the weight of and a reduction in the processing cost of the noise suppressing member 16 are possible. In a case in which the plate thickness t1 of the rib 18 is made to be the same as the plate thickness t2 of the region, which is at the periphery of the rib 18, at the noise suppressing member 16 (t1 = t2), a further lightening of the weight of the noise suppressing member 16 is possible, as compared with a case in which the plate thickness t1 of the rib 18 is made to be greater than the plate thickness t2 (t1 > t2).

In this way, in accordance with the present embodiment, deformation of the noise suppressing member 16 at the time of traveling can be suppressed, while an increase in the weight of the tire is suppressed.

Further, in the example shown in Fig. 1, the ribs 18 are not provided at the peak portion 16D of the convex portion 16B at the noise suppressing member 16, and therefore, it is easy for the noise suppressing member 16 to deform in directions in which the pair of mounting portions 16A approach or move away from one another. Accordingly, the workability at the time of mounting the noise suppressing member 16 to the tire inner surface 10A improves.

### [Other Embodiments]

Although an embodiment in the present invention has been described above, embodiments in the present invention are not limited to the above, and the present invention can of course be implemented by being modified in various ways other than the above within a scope that does not depart from the gist thereof.

The plate thickness t1 of the rib 18 is made to be equal to the plate thickness t2 of the region of the noise suppressing member 16, at the periphery of the rib 18, but the plate thickness t1 may be different than the plate thickness t2. For example, t1 may be less than t2 (t1 < t2).

In Fig. 1, one of the noise suppressing members 16 is provided the tire inner surface 10A. However, a plurality of the noise suppressing members 16 may be provided at the tire inner surface 10A.

The disclosure of Japanese Patent Application No. 2017-86146 filed on April 25, 2017 is, in its entirety, incorporated by reference into the present specification.
All publications, patent applications, and technical standards mentioned in the present specification are incorporated by reference into the present specification to the same extent as if such individual publication, patent application, or technical standard was specifically and individually indicated to be incorporated by reference.

## Claims

1. A pneumatic tire, comprising:
a noise suppressing member that has a mounting portion that is plate-shaped and that is fixed to a tire inner surface, a convex portion that is plate-shaped and is curved convexly from the mounting portion toward an inner side in a tire radial direction, and a bent portion that is formed at a boundary between the mounting portion and the convex portion,
wherein a rib is provided that extends from the mounting portion, which adjoins the bent portion, to the convex portion.

2. The pneumatic tire of claim 1, wherein the rib is formed integrally with the noise suppressing member.

3. The pneumatic tire of claim 2, wherein a plate thickness of the rib is equal to a plate thickness of a region of the noise suppressing member at a periphery of the rib.
